# EUROPÄISCHE PATENTSCHRIFT

(11) **EP 1 437 214 B1**
(45) Veröffentlichungstag und Bekanntmachung des Hinweises auf die Patenterteilung: **20.06.2007**
(21) Anmeldenummer: 04000188.5
(22) Anmeldetag: 08.01.2004
(51) Int. Cl.: B32B 3/12, B32B 13/02

(54) **Flexible Schichtplatte mit Wabenstruktur**
Flexible laminate board with honeycomb structure
Panneau stratifié souple à structure en nis d'abeilles

(30) Priorität: 10.01.2003 DE 10300584
(43) Veröffentlichungstag der Anmeldung: 14.07.2004
(73) Patentinhaber: Wedi, Stephan, 48282 Emsdetten (DE)
(72) Erfinder: Wedi, Stephan, 48282 Emsdetten (DE)
(74) Vertreter: Hoffmeister, Helmut

(56) Entgegenhaltungen:
- DE-A1- 10 104 737
- US-A- 3 857 217

## Beschreibung

Die Erfindung betrifft eine Schichtplatte, mit einer Mittelschicht und wenigstens einer Außenschicht, bei der die Mittelschicht aus polymerem Kunststoff besteht, in sich flexibel ist und eine grobzellige, wabenartige Struktur mit offenen Zellen zur Ober- und Unterseite der Mittelschicht hin aufweist, und mit wenigstens einer oder zwei Außenschichten, die wenigstens auf einer Seite der Mittelschicht aufkaschiert ist und diese abdeckt bzw. abdekken.

Wabenstrukturen aus Aluminium und Faserpapieren waren schon seit den fünfziger Jahren als Kernmaterialien mit hoher Druckfestigkeit bekannt. In den achtziger Jahren sind Wabenstrukturen aus thermoplastischen Kunststoffen entwickelt worden. Als Kunststoffe wurden insbesondere Polypropylen und Polycarbonat eingesetzt. Leichte, kostengünstige Wabenstrukturen in einem Dichtebereich von 12 kg/m³ bis 80 kg/m³ mit verschiedenen Lochdurchmessern, insbesondere zwischen 5 und 50 mm, werden inzwischen von der einschlägigen Industrie angeboten ( u.a. WACOTECH GmbH & Co. KG; TUBUS WABEN GmbH & Co. KG, 07422 Röttenbach).

Eine flexible Schichtplatte gemäß der eingangs genannten Gattung ist in der Schrift DE 298 09 543 U1 genannt. Hier wird eine Schichtplatte (Sandwichplatte) beschrieben, die einen grobzelligen, wabenartigen Stützkern besitzt, der mit einer faserverstärkten Deckschicht versehen ist. Die Deckschicht umhüllt die Faserarmierung. Als Deckschichten werden thermoplastische Schichten und Folien genannt.

Eine Schichtplatte mit derartigen thermoplastischen Deckschichten eignet sich schlecht für die Verwendung als Bauplatte, da insbesondere keramische Platten, wie Fliesen oder andere keramische Elemente, aber auch Leisten und Platten aus Holzwerkstoffen, nicht mit einfachen Klebetechniken angebracht werden können. Außerdem sind die aus Kunststoff bestehenden Deckschichten nicht flammenresistent.

Aus der DE 196 12 211 C2 ist weiterhin eine Sandwichstruktur mit Honigwaben-Kernmaterial und Deckschichten bekannt, wobei das Kernmaterial mit den Deckschichten durch ein selbstklebendes Prepreg auf der Grundlage eines harzimprägnierten Faserträgermaterials verbunden ist. Aus welchem Material die Deckschichten bestehen, wird nicht beschrieben. Vermutlich handelt es sich um Metalle, da die Sandwich-Konstruktion für die Luftfahrt bestimmt ist. Es handelt sich um eine kostspielige Sonderstruktur, die nicht für Deckschichten aus Mörtel bestimmt ist und auch hierfür offensichtlich nicht geeignet ist, da Prepreg eine klebende Struktur haben, die eine Verbindung mit Mörtel nicht fördert.

Mit Mörtel durch Tauchverfahren verbindbare Zellen-Leichtbauplatten, bei denen Gitterstege aus Metall verwendet werden, sind in der DE-AS 1 105 593 beschrieben.

US 3857217 offenbart eine Schichtplatte mit einer wabenartigen Mittelschicht aus imprägnierten Papier und Aussenschichten aus faserverstärkten Zementmaterial.

Ferner ist bekannt, die Rückseite von biegesteifen Sichtplatten mit einer Wabenstrukturplatte zu belegen, wobei eine gasdurchlässige Gewebeschicht und eine Harzschicht als Zwischenschicht verwendet werden. Es handelt sich hierbei um völlig ausgesteifte Bauplatten, die nicht zu einer flexiblen Struktur einer Schichtplatte führen.

Es stellt sich damit die Aufgabe, eine Schichtplatte anzugeben, die die vorgenannten Nachteile nicht aufweist, sondern ähnlich wie auch bekannte mörtelbeschichtete Platten an ihrer Außenseite eine sich zur Verbindung mit keramischen Platten und Platten aus Holzwerkstoffen geeignete Flächen darbietet, die weitgehend flammenresistent ist und trotzdem eine hohe Flexibilität aufweist.

Diese Aufgabe wird gelöst durch eine flexible Schichtplatte der eingangs genannten Art, bei der die Außenschicht oder wenigstens eine der beiden Außenschichten aus einem abgebundenen, mit Kunststoffzusätzen flexibilisierten Mörtel besteht und mit einem im Wesentlichen aus Fasern bestehenden Bahnmaterial armiert ist. Vorzugsweise ist die Außenseite putzartig rauh gehalten.

Ein für die Außenschichten geeigneter Mörtel wird in verschiedenen Zusammensetzungen in der Beschreibung genannt.

Wie bei Schichtplatten an sich bekannt, kann das armierende Bahnmaterial mit der Oberseite der Mittelschicht verbunden, insbesondere verschweißt oder verklebt, sein.

Das Bahnmaterial kann aus Polymerfasern in Form eines Vlieses, eines Gewebes oder eines Gewirkes bzw. aus Glasfaser in Form eines Vlieses, eines Gewebes oder eines Gewirkes bestehen. Auch Zellstofffasern in Form eines Vlieses können als Bahnmaterial eingesetzt werden.

Bei einem Gewebe oder Gewirke beträgt vorzugsweise der Maschendurchmesser im Mittel maximal 50% des mittleren Durchmessers einer Wabe der wabenartigen Struktur der Mittelschicht.

Um den Vorteil der Leichtgewichtigkeit und guter Wärmeisolierung zu bewahren, sollte der zu einer Außenschicht gehörende Mörtel maximal 33% des Hohlraum-Volumens der Mittelschicht ausfüllen. Die Außenschicht auf ihrer Außenseite weist bei einem gewissen Füllgrad zahlreiche, sich mit den Öffnungen der Zellen deckende, flache Mulden auf, die eine vergrößerte Haftfläche ergeben..

Bei der Schichtplatte dient vorzugsweise als mineralische Komponente des Mörtels der Außenschicht Zement; auch Gips kann hierfür verwendet werden. Die durch die Parameter der Mittel- und Außenschicht einstellbare Druckfestigkeit der Schichtplatte sollte auf der mit einer Außenschicht belegten Außenseite auf wenigstens 10 N/cm² eingestellt sein.

Die Dicke der unkaschierten Mittelschicht beträgt vorzugsweise zwischen 5 und 25 mm; sie besteht vorzugsweise aus einem Polyolefin oder Polyolefin-Mischpolymerisat, falls gewünscht, auch aus Polyester, Polycarbonat oder Polyamid.

Insbesondere eignet sich die Schichtplatte zur Verwendung als Bauplatte und Träger für weitere Beschichtungen, wie Tapeten, Farbaufträge, Fassadenplatten und Schallschutz-Plattenelemente. Eine andere wichtige Verwendungsart ist eine solche als Zwischenschicht-Element zwischen einer mit Rohren belegten Rohrverlegungsplatte, insbesondere für Fußbodenheizungen, und einer begehbaren Oberschicht, beispielsweise aus Parkettleisten oder Teppichboden.

Ausführungsbeispiele der Erfindung werden anhand der Zeichnung beschrieben.

Die Figuren der Zeichnung zeigen:
- Fig. 1: in auseinandergezogener Darstellung eine flexible Schichtplatte mit Mittelschicht und Außenschicht;
- Fig. 2: eine Draufsicht auf eine Schichtplatte mit teilweise abgenommener Außenschicht;
- Fig. 3: eine Schichtplatte in gegenüber natürlicher Größe etwas vergrößerter Darstellung, perspektivisch gesehen;
- Fig. 4: eine Schichtplatte gemäß Figur 3, von der Seite gesehen, in weiter vergrößerter Darstellung.

Die in den Figuren dargestellte dreischichtige Schichtplatte 100 umfasst einen Stützkern bzw. eine Mittelschicht 1, die beidseitig mit einer Außenschicht 2 und 3 verbunden ist. Die Mittelschicht 1 besteht aus Polyethylen in einer wabenartigen Struktur. Gewählt ist ein kommerziell erhältliches Produkt (Fabrikat WaveCore der Firma Wacotech GmbH & Co. KG) mit einem Wabendurchmesser von 5 mm und einer Dichte von 75 kg/m³. Die Höhe der Mittelschicht ist 4 mm; sie ist in sich flexibel und kann ohne weiteres bis zu einem Biegedurchmesser von 10 cm gebogen werden.

Auf die Mittelschicht 1, die eine grobzellige, wabenartige Struktur mit nach oben und unten offenen Zellen 4 aufweist, wird ein Bahnmaterial 6 aus einem offenen Glasfasergewebe 9 mit einer Maschengröße von ca. 5 mm Seitenlänge oder ein Glasfaservlies 7 mit einer Flächenmasse von 30g/m² aufgeklebt oder durch Heißverschweißen an den Wabenrändern aufgebracht.

Anschließend wird eine relativ dünnflüssige Mörtelmasse mit Hilfe eines Rakels verteilt, so dass dieses Material in die Glaserfaserschicht eindringt, jedoch auf Grund seiner Viskosität nicht mehr als 20% des Wabenvolumens ausfüllt. Nach dem Aushärten des Mörtels ergibt sich eine graue, armierte Mörtelschicht 7 von etwa 1 mm Dicke, die die Armierung aus Bahnmaterial vollständig einbettet.

Die Rezeptur des als Beschichtungsmasse für die Außenschichten verwendeten Mörtels besteht im Wesentlichen aus zwei Komponenten. Die eine Komponente ist eine Elastizierkomponente, die 10 bis 45 Gew.-%, vorzugsweise 22 Gew.-%, der gesamten Masse des Mörtels einnimmt. Die Elastizierkomponente enthält etwa 80 bis 90 Gew.-% einer Dispersion eines Copolymers aus Buthylacrylat und Styrol, vorzugsweise dispergiert in Wasser, 0,5 bis 2% einer Paraffin-Dispersion, ebenfalls in Wasser. Auch Epoxydharz-Dispersionen können eingesetzt werden. Derartige Elastizierkomponenten sind an sich bekannt und in der Fachliteratur beschrieben. Sie machen nach dem Aushärten die Kunstharz-Mörtelschicht flexibel, ohne dass es zu einem Abplatzen oder Reißen kommt. Als mineralische Komponente können beispielsweise Zement (Portland-Zement) oder Gips, aber auch andere wasserabbindende mineralische Baustoffe verwendet werden. Zement wird beispielsweise in einer Menge von 40 bis 90 Gew.-% dem trockenen Gemisch beigefügt. Zusätzlich kommen noch Reaktionsverzögerer, Abbindebeschleuniger, Verdickungsmittel oder Schaumverhinderer in Frage. Das Gemisch wird mit Wasser angemacht, das im Laufe des Abbindeprozesses vom Zement oder von anderen hydraulischen Bindemitteln aufgenommen und in das Kristallgefüge eingebaut wird.

Wesentlich ist, dass nach dem Aushärten des Mörtels die Außenschicht 5 bzw. die Außenschichten eine putzartig rauhe Außenseite erhalten, die mit bekannten Fliesenklebern, Holz-Klebstoffen und dergleichen bestrichen werden kann, so dass die Platte als tragende Bauplatte dienen kann.

Ein Mörtel, der sich mit entsprechend und in der Fachliteratur beschriebenen Rezepturen herstellen läßt, kann als elastifizierter Mörtel bezeichnet werden. Die Schichtplatte kann in einem Biegeradius von 20 cm und weniger gebogen werden. Gemessen wurde an einer Schichtplatte mit einer 4 mm dicken Polyethylen-Wabenstruktur als Mittelschicht 1 mit zwei etwa 0,3 bis 1 mm dicken Außenschicht 2, 3. Ein Abplatzen wurde hierbei nicht beobachtet.

Dem angemachten Kunstharz-Mörtel können auch Farbpigmente beigemischt werden. Beispielsweise kann durch Titandioxid eine sehr weiße Farbe der Außenschicht erreicht werden. Da Zement in der Regel ein dunkelgraues Aussehen nach dem Aushärten hat, ist die natürliche Farbe der Schichtplatte grau.

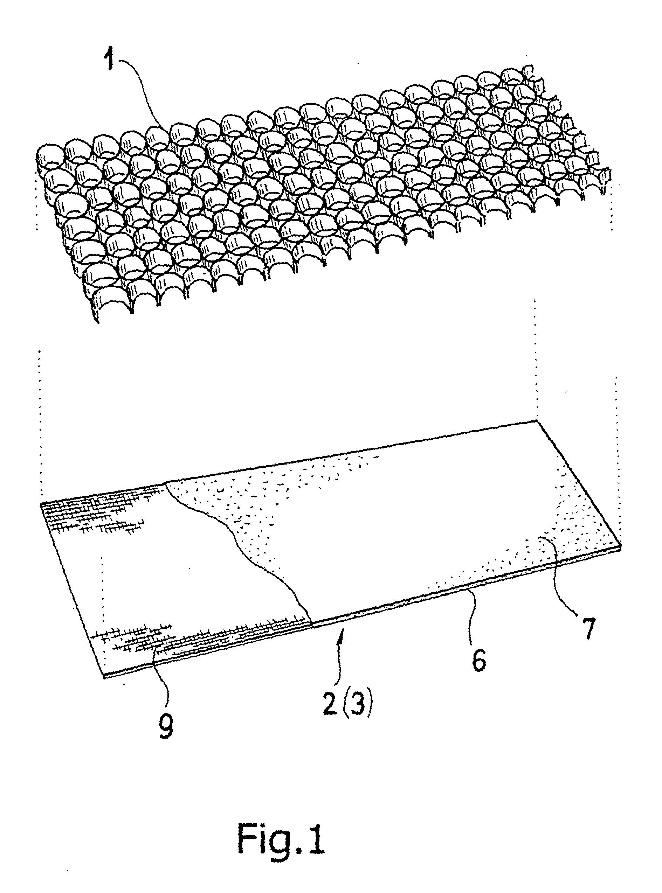

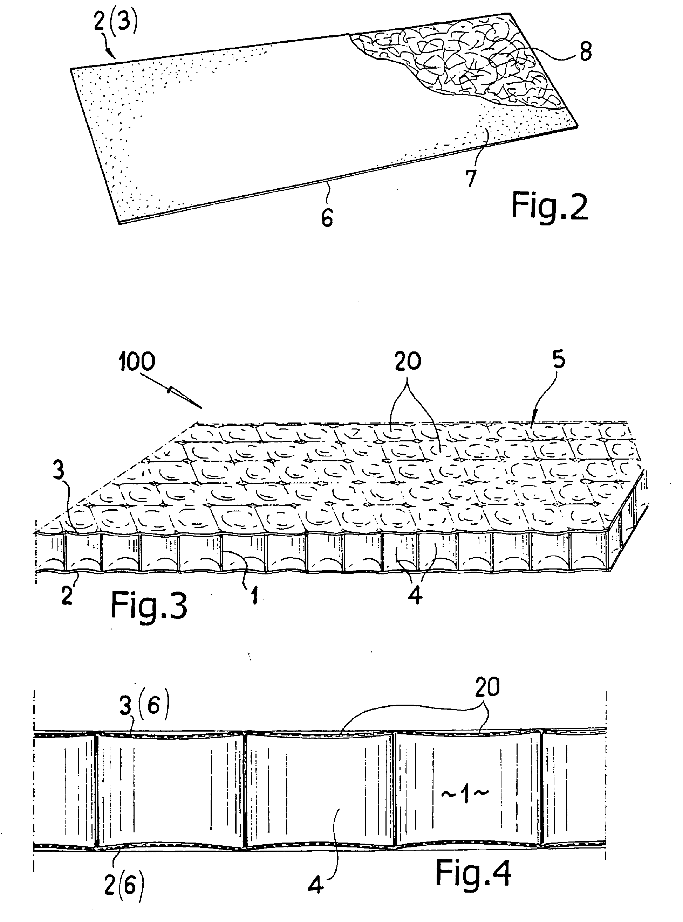

Als bahnförmiges Armierungsmaterial 6 eignen sich solche Stoffe, die sich aufgrund ihrer natürlichen Oberflächenbeschaffenheit oder durch entsprechende Nachbehandlung mit dem flüssigen Mörtel innig verbinden. Beispielsweise können Polymerfasern in Form eines Vlieses 8 (vgl. Fig.2), eines Gewebes 9 (vgl. Fig. 1) oder eines Gewirkes verwendet werden. Glasfasern in Form von Vlies, Gewebe und Gewirke haben sich besonders gut bewährt. Jedoch ist auch möglich, Zellstofffasern in entsprechender Gewebeoder Gewirke-Form zu verwenden.

Die Außenseite der Außenschicht sollte vorzugsweise nicht glatt sein, sondern eine strukturierte Oberfläche aufweisen. So hat sich erwiesen, dass durch das Antrocknen und Festwerden des Mörtels sich bei Verwendung eines Glasfaservlieses insbesondere an der Außenseite zahlreiche, sich mit den Öffnungen der Zellen 4 deckende, flache Mulden 20 entstehen, die eine vergrößerte Haftfläche ergeben.

Die Druckfestigkeit der Schichtplatte wird so eingestellt, dass sie auf der mit einer Außenschicht belegten Außenseite wenigstens 10 N/cm² beträgt.

Verwendet wird eine solche Schichtplatte ähnlich wie eine Bauplatte, jedoch mit dem großen Vorteil, dass sie biegsam ist und um Ecken herum gelegt werden kann. Weitere Beschichtungen, wie Tapeten, Farbaufträge, Fassadenplatten und Schallschutz-Plattenelemente können von der Schichtplatte getragen werden. Es ist aber auch möglich, und dies wird als besonderer Vorteil angesehen, die Platte zur Entkopplung eines Oberbelages von einem Untergrund zu verwenden. Sie kann zur Verfliesung und Belegung mit Natursteinen und Fliesen verwendet werden. Bei der Verlegung auf einer Fußbodenheizung ergibt sich eine Entkopplung vom spannungsreichen Untergrund bei gleichzeitig hervorragender Wärmeleitung durch die Mörtelschicht.

Die Variation der Wabengröße kann im weiten Bereich, vorzugsweise zwischen 5 und 20 mm, vorgenommen werden. Die Druckfestigkeit des Trägermaterials kann so eingestellt werden, dass sie auch rollstuhlgeeignet ist, wenn aufliegende Teppichböden, PVC- oder Linoleum-Beläge dies erfordern.

## Patentansprüche

1. Schichtplatte (100), umfassend
eine Mittelschicht (1) und wenigstens eine Außenschicht (2;3),
- bei der die Mittelschicht aus polymerem Kunststoff besteht, in sich flexibel ist und eine grobzellige, wabenartige Struktur mit offenen Zellen zur Ober- und Unterseite der Mittelschicht hin aufweist,
wenigstens eine oder zwei Außenschichten, die wenigstens auf einer Seite der Mittelschicht aufkaschiert ist und diese abdeckt bzw. abdecken
**dadurch gekennzeichnet, dass** die Außenschicht oder wenigstens eine der beiden Außenschichten aus einem abgebundenen, mit Kunststoffzusätzen flexibilisierten Mörtel (7) besteht und mit einem im Wesentlichen aus Fasern bestehenden Bahnmaterial (6) armiert ist.

2. Schichtplatte nach Anspruch 1, **dadurch gekennzeichnet, dass** die Außenseite (5) der ausgehärteten Außenschicht putzartig rauh gehalten ist.

3. Schichtplatte nach Anspruch 1 oder 2, **dadurch gekennzeichnet, dass** das armierende Bahnmaterial (6) mit der Oberseite der Mittelschicht verbunden, insbesondere verschweißt oder verklebt ist.

4. Schichtplatte nach Anspruch 1 bis 3, **dadurch gekennzeichnet, dass** das Bahnmaterial aus Polymerfasern oder Glasfasern in Form eines Vlies, eines Gewebes oder eines Gewirkes besteht.

5. Schichtplatte nach Anspruch 1 bis 3, **dadurch gekennzeichnet, dass** das Bahnmaterial aus Zellstofffasern in Form eines Vlies besteht.

6. Schichtplatte nach Anspruch 4, **dadurch gekennzeichnet, dass** bei einem Gewebe oder Gewirke der Maschendurchmesser im Mittel maximal 50% des mittleren Durchmessers einer Wabe der wabenartigen Struktur der Mittelschicht beträgt.

7. Schichtplatte nach einem der vorhergehenden Ansprüche, **dadurch gekennzeichnet, dass** der zu einer Außenschicht gehörende Mörtel maximal 33% des Hohlraum-Volumens der Mittelschicht ausfüllt.

8. Schichtplatte nach einem der vorhergehenden Ansprüche, **dadurch gekennzeichnet, dass** die Außenschicht (2;3) auf ihrer Außenseite (5) zahlreiche, sich mit den Öffnungen der Zellen (4) deckende, flache Mulden (20) aufweist.

9. Schichtplatte nach einem der vorhergehenden Ansprüche, **dadurch gekennzeichnet, dass** als mineralische Komponente des Mörtels Zement dient.

10. Schichtplatte nach einem der vorhergehenden Ansprüche, **dadurch gekennzeichnet, dass** als mineralische Komponente des Mörtels Gips dient.

11. Schichtplatte nach einem der vorhergehenden Ansprüche, **dadurch gekennzeichnet, dass** die Druckfestigkeit der Schichtplatte (100) auf der mit einer Außenschicht belegten Außenseite auf wenigstens 10 N/cm² eingestellt ist.

12. Schichtplatte nach einem der vorhergehenden Ansprüche, **dadurch gekennzeichnet, dass** die Dicke der unkaschierten Mittelschicht zwischen 5 und 25 mm beträgt.

13. Schichtplatte nach einem der vorhergehenden Ansprüche, **dadurch gekennzeichnet, dass** die Mittelschicht aus einem Polyolefin oder Polyolefin-Mischpolymerisiat, aus einem Polyester, Polycarbonat oder einem Polyamid besteht.

14. Schichtplatte nach einem der vorhergehenden Ansprüche, **dadurch gekennzeichnet, dass** die Mittelschicht einschl. Hohlräumen eine Dichte zwischen 10 kg/m² und 100 kg/m² besitzt.

15. Schichtplatte nach einem der vorhergehenden Ansprüche, **dadurch gekennzeichnet, dass** bei einer Dicke der Mittelschicht zwischen 4 bis 7 mm und einer Dicke der Außenschicht(en) zwischen 0,3 und 1 mm der ohne Abplatzen der Außenschicht(en) erreichbare Biegeradius der Schichtplatte 20 cm oder weniger beträgt.

16. Verwendung einer Schichtplatte nach Anspruch 1 und weiteren Unteransprüchen als Zwischenschicht-Element zwischen einer mit Rohren belegten Rohrverlegungsplatte, insbesondere für Fußbodenheizungen, und einer begehbaren Oberschicht, beispielsweise aus Parkettleisten oder Teppichboden.

## Claims

1. Laminate board (100), comprising a centre layer (1) and at least one outer layer (2; 3),
- wherein the centre layer consists of polymeric synthetic material, is flexible in itself and comprises a coarse-cell honeycomb structure with open cells in the direction of the upper and lower side of the centre layer,
at least one or two outer layers which is / are laminated on at least one side of the centre layer and cover/s this,
**characterised in that** the outer layer or at least one of the two outer layers consists of a hardened mortar (7) made flexible with synthetic additives and is reinforced with a web material (6) consisting essentially of fibres.

2. Laminate board according to claim 1, **characterised in that** the outer side (5) of the hardened outer layer is roughcast in a plaster-like manner.

3. Laminate board according to claim 1 or 2, **characterised in that** the reinforcing web material (6) is joined to the upper side of the centre layer, particularly welded or stuck.

4. Laminate board according to claim 1 to 3, **characterised in that** the web material consists of polymeric fibres or glass fibres in the form of a non-woven, a woven or a knitted fabric.

5. Laminate board according to claim 1 to 3, **characterised in that** the web material consists of cellulose fibres in the form of a non-woven fabric.

6. Laminate board according to claim 4, **characterised in that** in the case of a woven fabric or a knitted fabric, the average stitch diameter is at most 50% of the average diameter of a honeycomb of the honeycomb structure of the centre layer.

7. Laminate board according to one of the preceding claims, **characterised in that** the mortar belonging to an outer layer fills a maximum of 33% of the hollow space volume of the centre layer.

8. Laminate board according to one of the preceding claims, **characterised in that** the outer layer (2; 3) comprises, on its outer side (5), numerous flat holes (20) coinciding with the openings of the cells (4).

9. Laminate board according to one of the preceding claims, **characterised in that** cement serves as the mineral component of the mortar.

10. Laminate board according to one of the preceding claims, **characterised in that** gypsum serves as the mineral component of the mortar.

11. Laminate board according to one of the preceding claims, **characterised in that** the compressive strength of the laminate board (100) on the outer side covered with an outer layer is at least 10 N/cm².

12. Laminate board according to one of the preceding claims, **characterised in that** the thickness of the unlaminated centre layer is between 5 and 25 mm.

13. Laminate board according to one of the preceding claims, **characterised in that** the centre layer consists of a polyolefin or polyolefin copolymer, a polyester, polycarbonate or a polyamide.

14. Laminate board according to one of the preceding claims, **characterised in that** the centre layer including hollow spaces has a density between 10 kg/m² and 100 kg/m².

15. Laminate board according to one of the preceding claims, **characterised in that** with a thickness of the centre layer between 4 and 7 mm and a thickness of the outer layer(s) between 0.3 and 1 mm, the bending radius of the laminate board achievable without spalling of the outer layer(s) is 20 cm or less.

16. Use of a laminate board according to claim 1 and further dependent claims as an intermediate layer element between a pipe holding panel covered with pipes, in particular for floor heating, and an upper layer which can be walked on, for example consisting of parquet boards or carpet.

## Revendications

1. Panneau stratifié (100) comprenant
- une couche centrale (1) et au moins une couche extérieure (2 ;3), dans lequel la couche centrale composée de matière synthétique polymère est souple en soi et présente une structure en nids d'abeilles à grosses cellules, ces dernières étant ouvertes vers le haut et vers le bas,
- au moins une sinon deux couches extérieures contrecollées sur au moins l'une des faces de la couche centrale et recouvrant cette dernière,
**caractérisé en ce que** la couche extérieure ou l'une au moins des deux couches extérieures est composée d'un mortier (7) pris assoupli au moyen d'adjuvants synthétiques et armée d'un matériau en bande (6), ce dernier étant composé principalement de fibres.

2. Panneau stratifié selon la revendication 1, **caractérisé en ce que** la face externe (5) de la couche extérieure durcie est laissée rugueuse tel un enduit.

3. Panneau stratifié selon la revendication 1 ou 2, **caractérisé en ce que** le matériau d'armature en bande (6) est joint à la face supérieure de la couche centrale, notamment par soudage ou collage.

4. Panneau stratifié selon l'une quelconque des revendications 1 à 3, **caractérisé en ce que** le matériau en bande est composé de fibres polymères ou de fibres de verre sous la forme d'un tissu tissé ou non-tissé ou d'un maillage.

5. Panneau stratifié selon l'une quelconque des revendications 1 à 3, **caractérisé en ce que** le matériau en bande est composé de fibres de cellulose sous la forme d'un tissu non-tissé.

6. Panneau stratifié selon la revendication 4, **caractérisé en ce que**, dans le cas d'un tissu ou d'un maillage, le diamètre moyen des mailles est au maximum égal à 50 pourcent du diamètre moyen d'une alvéole de la structure en nids d'abeilles de la couche centrale.

7. Panneau stratifié selon l'une quelconque des revendications précédentes, **caractérisé en ce que** le mortier faisant partie d'une couche extérieure remplit au maximum 33 pourcent du volume des vides de la couche centrale.

8. Panneau stratifié selon l'une quelconque des revendications précédentes, **caractérisé en ce que** la couche extérieure (2 ;3) comporte sur sa face externe (5) de nombreuses cavités peu profondes (20) qui coïncident avec les ouvertures des cellules (4).

9. Panneau stratifié selon l'une quelconque des revendications précédentes, **caractérisé en ce que** le constituant minéral du mortier est du ciment.

10. Panneau stratifié selon l'une quelconque des revendications précédentes, **caractérisé en ce que** le constituant minéral du mortier est du plâtre.

11. Panneau stratifié selon l'une quelconque des revendications précédentes, **caractérisé en ce que** la résistance à la pression dudit panneau stratifié (100) est réglée, au niveau de la face externe recouverte d'une couche extérieure, pour au moins 10 N/cm2.

12. Panneau stratifié selon l'une quelconque des revendications précédentes, **caractérisé en ce que** l'épaisseur de la couche centrale non contrecollée est comprise entre 5 et 25 mm.

13. Panneau stratifié selon l'une quelconque des revendications précédentes, **caractérisé en ce que** la couche centrale est composée d'une polyoléfine ou d'un copolymère polyoléfinique, d'un polyester, polycarbonate ou polyamide.

14. Panneau stratifié selon l'une quelconque des revendications précédentes, **caractérisé en ce que** la couche centrale - vides inclus - présente une densité comprise entre 10 kg/m2 et 100 kg/m2.

15. Panneau stratifié selon l'une quelconque des revendications précédentes, **caractérisé en ce que** dans le cas où l'épaisseur de la couche centrale est comprise entre 4 et 7 mm et l'épaisseur de la ou des couches extérieures entre 0,3 et 1 mm, on peut obtenir un rayon de courbure du panneau stratifié égal ou inférieur à 20 cm, sans faire éclater la ou les couches extérieures.

16. Utilisation d'un panneau stratifié selon la revendication 1 et d'autres sous-revendications en tant qu'élément intermédiaire entre un panneau muni de tuyaux, notamment pour des systèmes de chauffage par le sol, et une couche supérieure sur laquelle on peut marcher, cette dernière étant constituée par exemple de lames de parquet ou de moquette.
